# EUROPÄISCHE PATENTSCHRIFT

(11) **EP 4 327 188 B1**
(45) Veröffentlichungstag und Bekanntmachung des Hinweises auf die Patenterteilung: **14.10.2026**
(21) Anmeldenummer: 22723648.6
(22) Anmeldetag: 20.04.2022
(51) Int. Cl.: G06F 3/01, G05G 5/00, G05G 5/03, G06F 3/0362, G06F 3/0488, G06F 3/0487, G05G 1/08, G06F 3/0482, F16F 9/00

(54) **BEDIENSYSTEM MIT WENIGSTENS EINER BEDIENEINRICHTUNG UND MIT WENIGSTENS EINER SCHNITTSTELLENEINRICHTUNG UND VERFAHREN ZUM BETREIBEN EINES BEDIENSYSTEMS**
OPERATOR CONTROL SYSTEM HAVING AT LEAST ONE OPERATOR CONTROL DEVICE AND HAVING AT LEAST ONE INTERFACE DEVICE, AND METHOD FOR OPERATING AN OPERATOR CONTROL SYSTEM
SYSTÈME DE COMMANDE UTILISATEUR COMPRENANT AU MOINS UN DISPOSITIF DE COMMANDE UTILISATEUR ET AU MOINS UN DISPOSITIF D'INTERFACE ET PROCÉDÉ POUR FAIRE FONCTIONNER UN SYSTÈME DE COMMANDE UTILISATEUR

(30) Priorität: 21.04.2021 DE 102021110172; 06.08.2021 DE 102021120544
(43) Veröffentlichungstag der Anmeldung: 28.02.2024
(73) Patentinhaber: INVENTUS Engineering GmbH, 6771 St. Anton i.M. (AT)
(72) Erfinder: MAYER, Markus, 6832 Sulz (Vorarlberg) (AT); BATTLOGG, Stefan, 6771 St. Anton i.M. (AT); BRANDL, Mathias, 6780 Schruns (AT)
(74) Vertreter: BSB Patentanwälte Schütte & Engelen Partnerschaft mbB
(86) Internationale Anmeldenummer: PCT/EP2022/060383
(87) Internationale Veröffentlichungsnummer: WO 2022/223596

(56) Entgegenhaltungen:
- US-A1- 2002 054 021
- US-A1- 2002 072 814
- US-A1- 2018 229 704
- GAMEZOPHER: "Graph Editor Bezier Tool", 16 March 2018 (2018-03-16), XP055950002, Retrieved from the Internet <URL:https://www.youtube.com/watch?v=WIKf3zeaE0U> [retrieved on 20220808]

## Beschreibung

Die vorliegende Erfindung betrifft ein Bediensystem mit wenigstens einer Bedieneinrichtung und mit wenigstens einer Schnittstelleneinrichtung. Die Bedieneinrichtung umfasst wenigstens ein Aufnahmeteil und wenigstens ein beweglich an dem Aufnahmeteil gelagertes Bedienelement. Das Bedienelement kann zur Durchführung einer Eingabe mittels wenigstens eines Fingers relativ zu dem Aufnahmeteil bewegt werden. Ein Bewegungswiderstand für die Bewegbarkeit des Bedienelements ist mittels wenigstens einer steuerbaren Bremseinrichtung in Abhängigkeit einer Relativposition des Bedienelements einstellbar. Dabei berücksichtigt die Bremseinrichtung wenigstens eine hinterlegte Zuordnung von Relativpositionen und Bewegungswiderständen. Die Zuordnung ist mittels der Schnittstelleneinrichtung anpassbar.

Bei solchen Bediensystemen wird die Zuordnung meist im Zuge der Herstellung bzw. Entwicklung erstellt und in der Bedieneinrichtung hinterlegt. Die Zuordnung entspricht üblicherweise einer Tabelle, auch als Look-Up-Table bezeichnet, in welcher Werte für die Relativpositionen und für die Bewegungswiderstände aufgeführt sind. So kann abgelesen werden, welchen Wert der Bewegungswiderstand an einer bestimmten Relativposition annehmen soll. Die Tabelle wird dann in einem geeigneten Format in der Bedieneinrichtung hinterlegt, beispielsweise als eine Datei bzw. Firmware. Dazu wird als Schnittstelleneinrichtung beispielsweise ein Computer mit der Bedieneinrichtung verbunden.

Um die Bedieneinrichtung mit umfangreichen haptischen Signalen bzw. Rückmeldungen auszustatten, wie sie beispielsweise in der WO 2018 215 350 A1 beschrieben sind, müssen in eine solche Tabelle jedoch eine erhebliche Menge an Werten eingetragen werden. Zudem ist auch die Festlegung bzw. Berechnung der einzelnen Werte sehr aufwendig, beispielsweise wenn viele unterschiedliche Rastpunkte oder sogar Vibrationen (sog. Ripple) vorgesehen sind.

Des Weiteren ist es auch für den Benutzer sehr aufwendig und mühsam, individuelle Anpassungen in der Zuordnung vorzunehmen. Vergleichbare Schwierigkeiten ergeben sich auch für einen Hersteller, welcher die Bedieneinrichtung in sein Produkt integrieren möchte, um damit bestimmte Funktionen anzusteuern. In der Regel müssen in der umfangreichen Tabelle zunächst die relevanten Werte identifiziert werden. Anschließend muss festgelegt werden, auf welche Zahlenwerte die Tabellenwerte erhöht oder verringert werden müssen, um die gewünschte Anpassung zu erzielen. Für ungeübte Benutzer ist es dabei oft sehr schwer nachzuvollziehen, wie sich die jeweiligen Zahlen tatsächlich auswirken und welches haptische Signal am Ende am Bedienelement wahrgenommen wird.

Die US 2002/054021 beschreibt das Designen von haptischen Feedbacks, welche anschließend gespeichert und anderen Anwendungen zur Verfügung gestellt werden können. Die kreierten Feedbacks können mit einem Ausgabegerät ausprobiert und gespürt werden. Auf einer grafischen Oberfläche kann das kreierte Feedback grafisch dargestellt und angepasst werden. Die Grafik wird korrespondierend zur Bewegung des Ausgabegeräts angepasst.

Aus der US 2002/072814 A1 ist eine Computermaus oder ein Trackball mit einem haptischen Feedback bekannt. Zur Anpassung des Feedbacks ist eine Lookup-Tabelle vorgesehen, in welcher die Zuordnung von Relativpositionen und Bewegungswiderständen hinterlegt ist.

Die US 2018/229704 A1 zeigt einen Drehknopf mit haptischem Feedback. Die Haptik kann in Abhängigkeit der Bewegungsrichtung angepasst werden.

Demgegenüber ist es die Aufgabe der vorliegenden Erfindung, ein Bediensystem mit verbesserten Möglichkeiten zur Anpassung und insbesondere auch zur Erstellung einer Zuordnung von Relativpositionen und Bewegungswiderständen bereitzustellen. Insbesondere soll sowohl Entwicklern als auch ungeübten Benutzern bzw. Endverbrauchern eine einfache und verständliche Möglichkeit zur Anpassung der Zuordnung ermöglicht werden.

Diese Aufgabe wird gelöst durch ein Bediensystem mit den Merkmalen des Anspruchs 1 sowie durch ein Verfahren mit den Merkmalen des Anspruchs 15 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Das erfindungsgemäße Bediensystem umfasst wenigstens eine Bedieneinrichtung und insbesondere wenigstens eine Schnittstelleneinrichtung. Die Bedieneinrichtung umfasst wenigstens ein Aufnahmeteil und wenigstens ein beweglich bzw. bewegbar an dem Aufnahmeteil gelagertes Bedienelement. Insbesondere ist das Bedienelement schwenkbar und/oder drehbar und/oder linear verschiebbar an dem Aufnahmeteil gelagert. Das Bedienelement kann zur Durchführung einer Eingabe mittels wenigstens eines Fingers relativ zu dem Aufnahmeteil innerhalb eines Bewegungsbereichs bewegt und insbesondere gedreht und/oder geschwenkt und/oder linear verschoben werden. Insbesondere wird der Daumen auch als ein Finger aufgefasst. Ein Bewegungswiderstand für die Bewegbarkeit des Bedienelements ist mittels wenigstens einer steuerbaren Bremseinrichtung in Abhängigkeit einer Relativposition des Bedienelements einstellbar. Dabei berücksichtigt die Bremseinrichtung wenigstens eine (in einer Steuereinrichtung) hinterlegte Zuordnung von Relativpositionen und Bewegungswiderständen. Insbesondere ordnet die Zuordnung einer Relativposition jeweils wenigstens einen Bewegungswiderstand zu und/oder einem Bewegungswiderstand jeweils wenigstens eine Relativposition zu. Die Zuordnung ist mittels der Schnittstelleneinrichtung anpassbar. Darunter wird vorzugsweise auch verstanden, dass die Zuordnung insbesondere mittels der Schnittstelleneinrichtung auch (erstmalig) herstellbar ist. Dabei zeigt die Schnittstelleneinrichtung mittels wenigstens einer grafischen Benutzeroberfläche wenigstens ein Koordinatensystem an. In dem Koordinatensystem können mittels eines Eingabemittels Vorgabepunkte für wenigstens einen Einstellungsbereich, welcher wenigstens einen Teil des Bewegungsbereichs präsentiert, positioniert werden. Für den Bewegungsbereich sind eine Vielzahl von Einstellungsbereichen vorgesehen. Insbesondere sind die Vorgabepunkte auf der Benutzeroberfläche sichtbar. Die Schnittstelleneinrichtung ist dazu geeignet und ausgebildet, eine in Abhängigkeit der Vorgabepunkte verlaufende Kurve zu erstellen und auf der Benutzeroberfläche anzuzeigen. Insbesondere ist die Schnittstelleneinrichtung dazu geeignet und ausgebildet, die Zuordnung in Abhängigkeit eines Verlaufs der Kurve zu bestimmen und insbesondere der Bremseinrichtung bereitzustellen und dazu vorzugsweise in einer Steuereinrichtung zu hinterlegen. Insbesondere wird dadurch eine Anpassung der Zuordnung durch visuell modulierbare Kurven ermöglicht. Dabei ist die Schnittstelleneinrichtung dazu geeignet und ausgebildet, eine für einen Einstellungsbereich angepasste Zuordnung automatisch und/oder auf Wunsch für die übrigen vorgesehenen Einstellungsbereiche zu übernehmen.

Das erfindungsgemäße Bediensystem bietet viele Vorteile. Einen erheblichen Vorteil bietet die Schnittstelleneinrichtung mit der Möglichkeit, die Zuordnung durch visuell modulierbare Kurven anzupassen. Dadurch ist auch für ungeübte Benutzer einfach und verständlich nachvollziehbar, wie der Verlauf des Bewegungswiderstands beispielsweise im Bereich eines Rastpunkts oder eines anderen haptischen Signals aussieht. Einen Vorteil bieten auch die Vorgabepunkte, mit denen gezielt und zugleich besonders anschaulich und einfach die Kurven beispielsweise mit einer Maus oder auf einem Touchscreen individuell angepasst werden können. Ein Vorteil ist auch, dass anhand der Vorgabepunkte eine Kurve erstellt und angezeigt wird. Dadurch werden Änderungen, beispielsweise durch Verschieben der Vorgabepunkte, direkt visuell nachvollziehbar. Insgesamt bietet die Erfindung die Möglichkeit einer visuellen und intuitiven Anpassung von Rastpunkten und anderen haptischen Signalen der Bedieneinrichtung. Es kann sozusagen auf einen Blick erkannt werden, wie sich eine bestimmte Anpassung der Zuordnung auf die haptische Rückmeldung am Bedienelement auswirkt.

Vorzugsweise umfassen die Vorgabepunkte Stützstellen. Insbesondere ist die Schnittstelleneinrichtung dazu geeignet und ausgebildet, eine durch die Stützstellen verlaufende Kurve zu erstellen. Beispielsweise können die Stützstellen mit einer interpolierten Kurve oder auch mit einer linear verlaufenden Kurve verbunden werden.

Die Vorgabepunkte umfassen vorzugsweise Hebelpunkte. Insbesondere ist die Schnittstelleneinrichtung dazu geeignet und ausgebildet, die Kurven in Abhängigkeit der Position der Hebelpunkte (im Koordinatensystem bzw. relativ zu der Kurve) zu krümmen.

Der Hebelpunkt liegt insbesondere auf einer Tangente der Kurve. Möglich ist auch, dass eine Tangente des Hebelpunkts die Kurve schneidet oder tangential an der Kurve liegt. Vorzugsweise wird die Kurve in Abhängigkeit einer Hebellänge gekrümmt. Die Hebellänge ist insbesondere ein Abstand vom Hebelpunkt zur Kurve insbesondere entlang der Tangente. Insbesondere kann die Schnittstelleneinrichtung die Hebelpunkte auf Wunsch oder automatisch so anpassen, dass sich für die Kurve ein symmetrischer Übergang und/oder ein Eckpunkt und/oder ein glatter Verlauf (insbesondere an einem dem Hebelpunkte zugeordneten Kurvenabschnitt) ergibt. Insbesondere können mit dem Eingabemittel Vorgabepunkte hinzugefügt und/oder entfernt werden.

Insbesondere werden die Stützstellen grafisch unterscheidbar von den Hebelpunkten dargestellt. Das ermöglicht ein besonders übersichtliches und intuitives Bearbeiten der Zuordnungen.

Vorzugsweise ist die Schnittstelleneinrichtung dazu geeignet und ausgebildet, auf der Kurve liegende oder zumindest näherungsweise im Bereich der Kurve liegende Werte (können auch als Punkte bezeichnet werden) zu ermitteln und insbesondere diese Werte der Bremseinrichtung zum Einstellen des Bewegungswiderstands in Abhängigkeit der Relativposition bereitzustellen. Insbesondere werden die Werte in einer Zuordnungstabelle hinterlegt, auf welche die Bremseinrichtung zugreift. Die Werte können beispielsweise in der Bedieneinrichtung selbst und/oder in einem Gerät hinterlegt werden, welches mit der Bedieneinrichtung bedient wird.

Es ist möglich, dass die Schnittstelleneinrichtung dazu geeignet und ausgebildet ist, aus der Kurve eine Zuordnungsfunktion zu bestimmen und die Zuordnungsfunktion der Bremseinrichtung zum Einstellen des Bewegungswiderstands in Abhängigkeit der Relativposition bereitzustellen. Möglich ist auch, dass die Zuordnungsfunktion einem Gerät zur Verfügung gestellt wird, welches mit der Bedieneinrichtung bedient wird. Dann kann das Gerät aus der Zuordnungsfunktion die Kurve bzw. die Werte ermitteln und der Bremseinrichtung bereitstellen, damit diese damit den Bewegungswiderstand in Abhängigkeit der Relativposition einstellen kann. Eine solche Zuordnungsfunktion benötigt weniger Speicher als z. B. eine tabellarische Zuordnung mit vielen Einzelwerten.

Insbesondere ist die Schnittstelleneinrichtung dazu geeignet und ausgebildet, die Kurve mathematisch zu optimieren und die Zuordnung (vorzugsweise die Zuordnungstabelle und/oder die Zuordnungsfunktion) aus einem optimierten Kurvenverlauf zu bestimmen. Insbesondere ist die Schnittstelleneinrichtung dazu geeignet und ausgebildet, die Kurve wenigstens abschnittsweise einer Linearisierung zu unterziehen. Insbesondere dient eine solche Linearisierung dazu, die Kurve näherungsweise mit einer linearen Funktion beschreiben zu können. Möglich sind auch andere geeignete Optimierungsfunktionen. Dadurch wird auch bei sehr hohen Auflösungen der Zuordnungen insgesamt nur wenig Speicher benötigt.

Es ist möglich und vorteilhaft, dass in der Schnittstelleneinrichtung wenigstens eine Kurve für eine bereits vordefinierte Zuordnung hinterlegt ist. Insbesondere wird diese Kurve auf der grafischen Benutzeroberfläche angezeigt. Insbesondere kann diese Kurve durch Positionieren von Vorgabepunkten angepasst werden. Ausgehend von einer solchen Kurve ist eine besonders einfache und gezielte Anpassung der Zuordnung möglich.

In der Schnittstelleneinrichtung können mehrere Kurven für vordefinierte Zuordnungen hinterlegt sein. Insbesondere ist aus diesen Kurven eine Kurve auswählbar und anpassbar. Beispielsweise können solche Kurven besonders leicht zu überwindende oder auch besonders schwer zu überwindende Rastpunkte betreffen. Solche Kurven können auch mit besonders deutlich wahrnehmbaren haptischen Signalen ausgestattet sein, beispielsweise mit chaotisch bzw. zufällig schwingenden Vibrationen.

In einer besonders vorteilhaften Weiterbildung ist die Schnittstelleneinrichtung dazu geeignet und ausgebildet, mittels eines Algorithmus des maschinellen Lernens in Abhängigkeit eines Benutzerverhaltens und/oder situationsabhängig eine Kurve zu erstellen und/oder anzupassen und/oder eine Kurve aus mehreren Kurven auszuwählen. Eine solche Kurve kann ein Benutzer dann wahlweise auch noch weiter anpassen. Möglich ist auch, dass eine solche Kurve automatisch eingestellt wird, beispielsweise wenn keine weitere Anpassung vorgesehen ist oder erfolgt. Der Algorithmus des maschinellen Lernens kann auch als künstliche Intelligenz bezeichnet werden.

Im Einstellungsbereich ist insbesondere wenigstens eine Kurve mit wenigstens einem gipfelartigen Maximum erzeugbar und vorzugsweise weiter anpassbar. Insbesondere ist das Maximum bei einer Bedienung des Bedienelements als ein Rastpunkt (englisch Tick) haptisch wahrnehmbar. Insbesondere ist ein Rastpunkt durch einen Anstieg des Bewegungswiderstands mit einem nachfolgenden Abfallen des Bewegungswiderstands gekennzeichnet. Insbesondere ist zwischen dem Ansteigen und dem Abfallen des Bewegungswiderstands wenigstens ein Höhepunkt und insbesondere ein Maximum vorgesehen. Dem Rastpunkt können weitere haptische Signale zugeordnet werden, beispielsweise vorgelagerte und/oder nachgelagerte kleinere Höhepunkte. Die Anpassung solcher Rastpunkte erfolgt insbesondere mittels der visuell modulierbaren Kurven.

Die Schnittstelleneinrichtung ist vorzugsweise dazu geeignet und ausgebildet, mittels einer Benutzereingabe abzufragen, wie viele Einstellungsbereiche (insbesondere Rastpunkte) gewünscht sind. Insbesondere ist die Schnittstelleneinrichtung dazu geeignet und ausgebildet, eine Größe des Einstellungsbereichs aufgrund der Benutzervorgabe automatisch zu bestimmen und dazu einen für die Bewegbarkeit des Bedienelements vorgesehenen Bewegungsbereich durch die Anzahl der Rastpunkte zu teilen. Die Größe des Einstellungsbereichs kann auch automatisiert mittels eines Algorithmus des maschinellen Lernens in Abhängigkeit eines Benutzerverhaltens und/oder situationsabhängig ermittelt werden.

Beispielsweise ist für eine Drehbewegung ein Bewegungsbereich von 360° vorgesehen und es werden zwölf haptisch wahrnehmbare Rastpunkte gewünscht, beispielsweise zur Auswahl einzelner Menüpunkte eines zu bedienenden Geräts. Dann sind für den Einstellungsbereich 30° vorgesehen. Für die Drehbewegung von 30° kann dann mit den Vorgabepunkten eine Kurve für z. B. einen Drehmomentverlauf erstellt und angepasst werden.

Die Schnittstelleneinrichtung ist dazu geeignet und ausgebildet, eine für einen Einstellungsbereich angepasste Zuordnung automatisch und/oder auf Wunsch für die übrigen vorgesehenen Einstellungsbereiche (insbesondere für die übrigen Rastpunkte) zu übernehmen. Insbesondere kann dadurch der gesamte Bewegungsbereich des Bedienelements mit einer Zuordnung ausgestattet werden. Insbesondere kann diese Funktion bei Bedarf deaktiviert werden. Insbesondere können die so erstellten Zuordnungen noch angepasst werden.

Eine Größe des Einstellungsbereichs ist insbesondere benutzerdefiniert anpassbar. Beispielsweise beträgt die Größe des Einstellungsbereichs eine Teilumdrehung oder eine ganze Umdrehung oder auch mehr als eine Umdrehung. Der Einstellungsbereich ist insbesondere kleiner oder gleich dem Bewegungsbereich. Beispielsweise liegt die Größe des Einstellungsbereichs zwischen 1° und 360° oder einem Vielfachen von 360°. Beispielsweise kann der Einstellungsbereich 1,5 oder zwei oder 2,5 oder fünf oder mehr Umdrehungen betragen.

In allen Ausgestaltungen ist es besonders bevorzugt und vorteilhaft, dass die Zuordnung unter Berücksichtigung einer Bewegungsrichtung des Bedienelements anpassbar ist. Beispielsweise können die Rastpunkte in eine Richtung enger liegen oder schwerer zu überwinden sein als in die andere Richtung. Die Bewegungsrichtung ist insbesondere eine Drehrichtung. Die Bewegungsrichtung kann auch eine Schwenkrichtung oder eine lineare Bewegungsrichtung sein. Insbesondere ist in der Bremseinrichtung für eine Rückwärtsbewegung und für eine Vorwärtsbewegung jeweils wenigstens eine (unterschiedliche) Zuordnung hinterlegt. Möglich ist auch, dass für die Bremseinrichtung nur eine Zuordnung hinterlegt ist, welche richtungsabhängig automatisch von der Bremseinrichtung angepasst wird.

Vorzugsweise ist die Schnittstelleneinrichtung dazu geeignet und ausgebildet, für einen Einstellungsbereich jeweils eine visuell modulierbare Kurve für jede Bewegungsrichtung bereitzustellen. Möglich ist auch, dass die Schnittstelleneinrichtung für den Einstellungsbereich eine visuell modulierbare Kurve für die eine Bewegungsrichtung bereitstellt und daraus automatisch oder wahlweise eine Kurve für die andere Bewegungsrichtung erstellt bzw. ableitet. Beispielsweise kann mittels einer Benutzereingabe abgefragt werden, ob für den Einstellungsbereich eine richtungsabhängige Anpassung erfolgen soll oder nicht.

Die Schnittstelleneinrichtung ist vorzugsweise dazu geeignet und ausgebildet, aus einer angepassten Kurve für eine Bewegungsrichtung automatisch oder auf Wunsch eine Kurve für die andere Bewegungsrichtung zu erzeugen und vorzugsweise dazu die Kurve wenigstens teilweise zu spiegeln. Insbesondere ist die Schnittstelleneinrichtung dazu geeignet und ausgebildet, die Kurve und/oder die Zuordnung mit wenigstens einem Korrekturparameter zur Berücksichtigung einer Fingerkinematik der menschlichen Hand wenigstens abschnittsweise anzupassen. Die derart erstellte Kurve kann bedarfsweise weiter angepasst werden. Die Schnittstelleneinrichtung ist vorzugsweise dazu geeignet und ausgebildet, eine (jede) Kurve und/oder eine (jede) Zuordnung automatisch oder auf Wunsch mit dem Korrekturparameter wenigstens abschnittsweise anzupassen.

Eine solche Ausgestaltung ist besonders vorteilhaft bei einem drehbaren Bedienelement, beispielsweise bei einem Mausrad oder einer Fingerwalze bzw. Daumenwalze. Ein solcher Korrekturparameter ermöglicht, dass Rastpunkte und andere haptische Signale in beide Drehrichtungen identisch wahrgenommen werden können. Auch bei anderen mit nur einem Finger bedienbaren Bedienelementen ist ein solcher Korrekturparameter sehr von Vorteil.

Es ist bevorzugt und vorteilhaft, dass der Korrekturparameter für eine Rückwärtsbewegung (insbesondere Rückwärtsdrehung), welche durch Ausstrecken des Fingers erfolgt, eine wenigstens abschnittsweise Absenkung des Bewegungswiderstands vorsieht. Bevorzugt und vorteilhaft ist auch, dass der Korrekturparameter für eine Vorwärtsbewegung (insbesondere Vorwärtsdrehung), welche durch Einziehen des Fingers erfolgt, eine Erhöhung des Bewegungswiderstands vorsieht. Insbesondere erfolgt die Absenkung bzw. Erhöhung des Bewegungswiderstands relativ zum Bewegungswiderstand der jeweils anderen Richtung.

Die Schnittstelleneinrichtung ist insbesondere dazu geeignet und ausgebildet, eine Kurve wenigstens teilweise mit wenigstens einem Geschwindigkeitskorrekturparameter zur Berücksichtigung einer Bewegungsgeschwindigkeit des Bedienelements anzupassen. Insbesondere sieht der Geschwindigkeitskorrekturparameter vor, dass der in einer Zuordnung vorgesehene Bewegungswiderstand in Abhängigkeit der Bewegungsgeschwindigkeit des Bedienelements angehoben und/oder abgesenkt wird. Insbesondere wird dabei der Zusammenhang berücksichtigt, dass mit zunehmender Bewegungsgeschwindigkeit des Bedienelements eine Erhöhung des Bewegungswiderstands erfolgen sollte, damit der am Bedienelement spürbare Bewegungswiderstand wenigstens näherungsweise gleich bleibt.

Der Geschwindigkeitskorrekturparameter ist vorzugsweise als eine Funktion des Bewegungswiderstands über die Geschwindigkeit oder Beschleunigung des Bedienelements ausgebildet. Insbesondere kann der Geschwindigkeitskorrekturparameter auch mittels einer Kurve erstellt und/oder angepasst werden. Insbesondere derart, wie es hier für die Anpassung der Zuordnung beschrieben ist.

Die Schnittstelleneinrichtung ist insbesondere dazu geeignet und ausgebildet, in Abhängigkeit von Vorgabepunkten erstmalig eine Zuordnung zu erstellen. Dadurch kann die Zuordnung insbesondere im Rahmen der Herstellung und/oder einer Neukonfiguration durch visuell modulierbare Kurven erzeugt werden. Das ermöglicht auch für Hersteller und Entwickler eine einfache Anpassung der Zuordnung.

Die Anmelderin behält sich vor, eine Bedieneinrichtung zu beanspruchen, welche insbesondere für das erfindungsgemäße Bediensystem vorgesehen ist. Die Bedieneinrichtung umfasst wenigstens ein Aufnahmeteil und wenigstens ein beweglich an dem Aufnahmeteil gelagertes Bedienelement. Insbesondere ist das Bedienelement schwenkbar und/oder drehbar und/oder linear verschiebbar an dem Aufnahmeteil gelagert. Das Bedienelement kann zur Durchführung einer Eingabe mittels wenigstens eines Fingers relativ zu dem Aufnahmeteil bewegt und insbesondere gedreht und/oder geschwenkt und/oder linear verschoben werden. Ein Bewegungswiderstand für die Bewegbarkeit des Bedienelements ist mittels wenigstens einer steuerbaren Bremseinrichtung in Abhängigkeit einer Relativposition des Bedienelements einstellbar. Dadurch ist die Bewegbarkeit des Bedienelements mit einer einstellbaren Rasterung beaufschlagbar. Die Rasterung umfasst Rastpunkte, welche jeweils einen Bewegungswiderstandsverlauf mit einer Anstiegsphase und einer Abstiegsphase und insbesondere wenigstens einem zwischen der Anstiegsphase und der Abstiegsphase liegenden Höhepunkt umfassen. Insbesondere ist dadurch ein Rastpunkt während der Bewegung des Bedienelements haptisch wahrnehmbar. Dabei ist die Bremseinrichtung dazu geeignet und ausgebildet, bei einer Änderung einer Bewegungsrichtung des Bedienelements automatisch einen während der Bewegung zunehmenden oder zumindest während der Bewegung vorübergehend gleich bleibenden Bewegungswiderstand einzustellen.

Eine solche Bedieneinrichtung bietet viele Vorteile und ermöglicht eine besonders präzise Haptik der Rasterung. So wird zuverlässig und unaufwendig verhindert, dass bei einer Richtungsumkehr zunächst ein abnehmender Bewegungswiderstand auftritt, welcher sich unpräzise und schwammig anfühlt.

Der zunehmende bzw. gleich bleibende Bewegungswiderstand bezieht sich insbesondere auf den Bewegungswiderstand als Funktion der Relativposition. Insbesondere umfasst die Bedieneinrichtung wenigstens eine Sensoreinrichtung zur Erfassung der Bewegungsrichtung des Bedienelements.

Vorzugsweise beginnt die Rasterung bei einer Änderung einer Bewegungsrichtung des Bedienelements automatisch bei einer Anstiegsphase des Bewegungswiderstandsverlaufs. Insbesondere ist die Bremseinrichtung dazu geeignet und ausgebildet, unabhängig von der Relativposition des Bedienelements die Rasterung nach einer Änderung der Bewegungsrichtung (stets) mit einer Anstiegsphase zu beginnen. Insbesondere wird bei einer Änderung der Bewegungsrichtung eine Talphase des Bewegungswiderstandsverlaufs übersprungen, welche zwischen einer Abstiegsphase und einer Anstiegsphase liegt.

Insbesondere ist der Bewegungswiderstandsverlauf für jede Bewegungsrichtung vorgesehen. Der Bewegungswiderstandsverlauf kann in Abhängigkeit der Bewegungsrichtung gleich oder auch unterschiedlich ausgebildet sein. Beispielsweise kann in Abhängigkeit der Bewegungsrichtung ein Korrekturfaktor zu Berücksichtigung der Fingerkinematik angewendet werden.

Die Anmelderin behält sich vor, eine Bedieneinrichtung zu beanspruchen, welche insbesondere für das erfindungsgemäße Bediensystem vorgesehen ist. Diese Bedieneinrichtung umfasst wenigstens ein Aufnahmeteil und wenigstens ein beweglich an dem Aufnahmeteil gelagertes Bedienelement. Insbesondere ist das Bedienelement schwenkbar und/oder drehbar und/oder linear verschiebbar an dem Aufnahmeteil gelagert. Das Bedienelement kann zur Durchführung einer Eingabe mittels wenigstens eines Fingers relativ zu dem Aufnahmeteil bewegt und insbesondere gedreht und/oder geschwenkt und/oder linear verschoben werden. Ein Bewegungswiderstand für die Bewegbarkeit des Bedienelements ist mittels wenigstens einer steuerbaren Bremseinrichtung in Abhängigkeit einer Relativposition des Bedienelements einstellbar. Dabei berücksichtigt die Bremseinrichtung wenigstens eine hinterlegte Zuordnung von Relativpositionen und Bewegungswiderständen. Dabei ist die Bremseinrichtung dazu geeignet und ausgebildet, die hinterlegte Zuordnung in Abhängigkeit einer Bewegungsrichtung des Bedienelements automatisch oder auf Wunsch mit einem Korrekturparameter zur Berücksichtigung einer Fingerkinematik der menschlichen Hand anzupassen. Der Korrekturparameter sieht für eine Rückwärtsbewegung (insbesondere Rückwärtsdrehung), welche durch Ausstrecken des Fingers erfolgt, eine wenigstens abschnittsweise Absenkung des Bewegungswiderstands vor. Der Korrekturparameter sieht für eine Vorwärtsbewegung (insbesondere Vorwärtsdrehung), welche durch Einziehen des Fingers erfolgt, eine Erhöhung des Bewegungswiderstands vor.

Auch eine solche Bedieneinrichtung bietet viele Vorteile und ermöglicht eine besonders präzise Haptik bei der Bedienung beispielsweise einer Computermaus oder einer Fingerwalze an einem Lenkrad eines Kraftfahrzeugs.

Im Rahmen der vorliegenden Erfindung beziehen sich der Begriff Umdrehung bzw. Angaben zu Umdrehungen, Drehmomenten und Drehzahlen insbesondere auf eine Drehbewegung eines drehbaren Bedienelements und insbesondere auch auf eine Drehbewegung der Bremseinrichtung. Insbesondere bezieht sich die Drehbewegung der Bremseinrichtung auf eine Bremskomponente, welche relativ zu einer anderen Bremskomponente der Bremseinrichtung drehbar ist. Insbesondere werden solche Angaben dann auf die Bremseinrichtung bezogen, wenn das Bedienelement verschwenkbar und/oder linear verschiebbar ist und somit selbst keine Drehbewegung vollziehen kann. Dann sind solche Bedienelemente insbesondere mittels einer Getriebeeinrichtung an die Bremseinrichtung gekoppelt. Insbesondere setzt die Getriebeeinrichtung eine Schwenkbewegung und/oder lineare Bewegung des Bedienelements in eine Drehbewegung für eine der Bremskomponenten der Bremseinrichtung um. Aber auch bei einem drehbaren Bedienelement können solche Angaben auf die Bremseinrichtung bezogen sein.

In allen Ausgestaltungen ist der Bewegungswiderstand für die Bewegbarkeit des Bedienelements vorzugsweise ein Drehmoment für die Drehbarkeit des Bedienelements und/oder ein Moment für eine lineare Bewegbarkeit des Bedienelements. Insbesondere können in Rahmen der vorliegenden Erfindung der Begriff "Bewegungswiderstand" durch "Drehmoment" bzw. "Moment" oder der Begriff "drehbar" bzw. "Drehbarkeit" durch "bewegbar" bzw. "Bewegbarkeit" (soweit sinnvoll) ersetzt werden.

Insbesondere umfasst die Bedieneinrichtung wenigstens eine Sensoreinrichtung zur mittelbaren und/oder unmittelbaren Erfassung der Relativposition des Bedienelements. Eine Erfassung der Relativposition des Bedienelements erfolgt insbesondere über eine sensorische Erfassung einer Winkelstellung der drehbaren Bremskomponente relativ zur anderen Bremskomponente. Alternativ oder zusätzlich kann die Relativposition des Bedienelements auch sensorisch über eine Stellung des Bedienelements selbst und/oder einer mit dem Bedienelement gekoppelten Getriebeeinrichtung sensorisch erfasst werden.

Vorzugsweise ist die Bremseinrichtung magnetorheologisch ausgebildet. Insbesondere umfasst die Bremseinrichtung wenigstens zwei relativ zueinander drehbare Bremskomponenten. Insbesondere umfasst die Bremseinrichtung wenigstens ein magnetorheologisches Medium und wenigstens eine Felderzeugungseinrichtung zur Erzeugung eines Magnetfeldes und insbesondere auch zur Steuerung einer magnetischen und/oder elektrischen Feldstärke. Insbesondere ist mittels der Felderzeugungseinrichtung das Medium beeinflussbar, um die Bewegbarkeit der Bremskomponenten zueinander und somit auch den Bewegungswiderstand (insbesondere das Moment bzw. Drehmoment) für die Bewegbarkeit des Bedienelements einzustellen. Mit einer magnetorheologischen Bremseinrichtung können besonders detaillierte haptische Rückmeldungen erzeugt werden.

Insbesondere wird im Koordinatensystem eine grafische Auftragung von Bewegungswiderständen als Funktion der Relativposition und beispielsweise eines Winkels aufgetragen und angezeigt. Insbesondere wird im Koordinatensystem eine Auftragung einer Größe für den Bewegungswiderstand in Bezug zu einer Größe bzw. als Funktion einer Größe für die Relativposition angezeigt.

Die Relativposition ist insbesondere ein Winkel. Vorzugsweise ist die Relativposition ein Drehwinkel oder ein Schwenkwinkel oder ein linearer Positionswert. Die Relativposition kann auch einer anderen charakteristischen Größe für eine Relativposition des Bedienelements entsprechen. Der Bewegungswiderstand wird insbesondere durch eine Größe für eine Kraft und beispielsweise ein Drehmoment oder dergleichen repräsentiert. Der Bewegungswiderstand kann auch einer anderen für den Bewegungswiderstand charakteristischen Größe entsprechen. Beispielsweise kann ein Strom oder eine Spannung einer Spule der einer magnetorheologisch ausgebildeten Bremseinrichtung als Größe für den Bewegungswiderstand vorgesehen sein.

Insbesondere ist die Schnittstelleneinrichtung dazu geeignet und ausgebildet, die Zuordnung durch visuell bzw. grafisch modulierte Kurven zu erstellen und/oder anzupassen. Die Schnittstelleneinrichtung umfasst insbesondere wenigstens einen Algorithmus zur Ausführung der Schritte. Insbesondere betrifft die Erfindung eine parametrische Modellierung von Zuordnungen mittels Vorgabepunkten auf der grafischen Benutzeroberfläche. Insbesondere ist die Schnittstelleneinrichtung dazu geeignet und ausgebildet, die hier verfahrensmäßig formulierten Merkmale bzw. Schritte auszuführen. Die Schnittstelleneinrichtung kann eine grafische Benutzeroberfläche und/oder ein Eingabemittel umfassen.

Im Rahmen der vorliegenden Erfindung werden unter einer Kurve insbesondere auch lineare Verbindungen der Vorgabepunkte verstanden. Insbesondere ist die Schnittstelleneinrichtung dazu geeignet und ausgebildet, die Kurve in Abhängigkeit der Vorgabepunkte und vorzugsweise zwischen den Stützstellen und insbesondere auch unter Berücksichtigung der Hebelpunkte wenigstens näherungsweise zu berechnen und vorzugsweise zu interpolieren. Insbesondere ist mittels der Schnittstelleneinrichtung eine Anpassung der Zuordnungen nach der Art von Bezierkurven durchführbar. Insbesondere sind die Vorgabepunkte dazu ausgebildet, Bezierkurven zu erstellen. Insbesondere können die Vorgabepunkte nur in einem zulässigen Bereich positioniert werden, sodass kritische oder nicht einstellbare Zuordnung dadurch vermieden werden.

Insbesondere ist für die Bewegbarkeit des Bedienelements wenigstens ein Bewegungsbereich vorgesehen. Insbesondere ist das Bedienelement innerhalb des Bewegungsbereichs bewegbar und vorzugsweise nur innerhalb des Bewegungsbereichs bewegbar. Der Bewegungsbereich kann unendlich ausgebildet sein. Dann ist das Bedienelement insbesondere (unendlich) drehbar. Der Bewegungsbereich kann auch begrenzt bzw. begrenzbar ausgebildet sein. Dabei kann das Bedienelement insbesondere drehbar, schwenkbar und/oder linear verschiebbar ausgebildet sein. Bewegungsbereich kann mechanische begrenzt sein und z. B. mechanische Anschläge aufweisen. Möglich und bevorzugt ist auch, dass der Bewegungsbereich mittels der Bremseinrichtung begrenzbar ausgebildet ist. Insbesondere ist dann eine haptische Begrenzung des Bewegungsbereichs vorgesehen. Beispielsweise erfolgt die Begrenzung durch ein gezieltes Erhöhen des Bewegungswiderstands, sodass mit bestimmungsgemäßen Fingerkräften kein (Weiter-) Bewegen des Bedienelements in eine Richtung oder auch in beide bzw. alle Bewegungsrichtungen mehr möglich ist. Insbesondere ist der Bewegungsbereich an beliebigen Positionen mittels der Bremseinrichtung begrenzbar. Eine solche Begrenzung kann auch als haptischer bzw. simulierter Anschlag bezeichnet werden. Möglich ist auch, dass der Bewegungsbereich sowohl mechanisch begrenzt als auch mittels der Bremseinrichtung individuell begrenzbar ist.

Insbesondere liegen im Bewegungsbereich mehrere Relativpositionen. Mit anderen Worten, das Bedienelement kann innerhalb des Bewegungsbereichs an verschiedene und vorzugsweise beliebige Relativpositionen bewegt werden. Dabei ist an einer Relativposition der Bewegungswiderstand an dem Bedienelement spürbar, welcher der Relativpositionen gemäß Zuordnung zugeordnet ist. An einer Relativposition wird das Bedienelement mit dem jeweils zugeordneten Bewegungswiderstand beaufschlagt. Der Bewegungswiderstand kann mittels der Bremseinrichtung von frei drehbar über gebremst bis für die vorgesehenen Fingerkräfte blockiert eingestellt werden.

Der Einstellungsbereich präsentiert wenigstens einen Teil des Bewegungsbereichs. Der Einstellungsbereich kann den ganzen Bewegungsbereich umfassen. Für den Bewegungsbereich sind eine Vielzahl von Einstellungsbereichen vorgesehen.

Mittels der visuell modulierten Kurven ist die Zuordnung für jeden Einstellungsbereich individuell einstellbar.

Weitere Vorteile und Merkmale der vorliegenden Erfindung ergeben sich aus der Beschreibung der Ausführungsbeispiele, die im Folgenden mit Bezug auf die beiliegenden Figuren erläutert werden.

In den Figuren zeigen:
- Fig. 1a-1f: rein schematische Darstellungen von erfindungsgemäßen Bediensystemen mit Bedieneinrichtungen;
- Fig. 2: eine rein schematische Querschnittsdarstellung einer magnetorheologischen Bremseinrichtung;
- Fig. 3: einen schematischen Querschnitt durch eine Bedieneinrichtung eines Bediensystems mit einer magnetorheologischen Bremseinrichtung;
- Fig. 4: ein Ausführungsbeispiel einer erfindungsgemäßen Benutzeroberfläche einer Schnittstelleneinrichtung eines Bediensystems;
- Fig. 5: ein weiteres Ausführungsbeispiel einer Benutzeroberfläche einer Schnittstelleneinrichtung;
- Fig. 6: verschiedene Kurven des Bewegungswiderstandsverlaufs in einem Koordinatensystem einer Benutzeroberfläche einer Schnittstelleneinrichtung des Bediensystems;
- Fig. 7: ein Übersichtsschaubild über die Funktionsweise des Bediensystems und eines erfindungsgemäßen Verfahrens; und
- Fig. 8a-8b: Skizzen zur Veranschaulichung einer Funktionsweise der Schnittstelleneinrichtung.

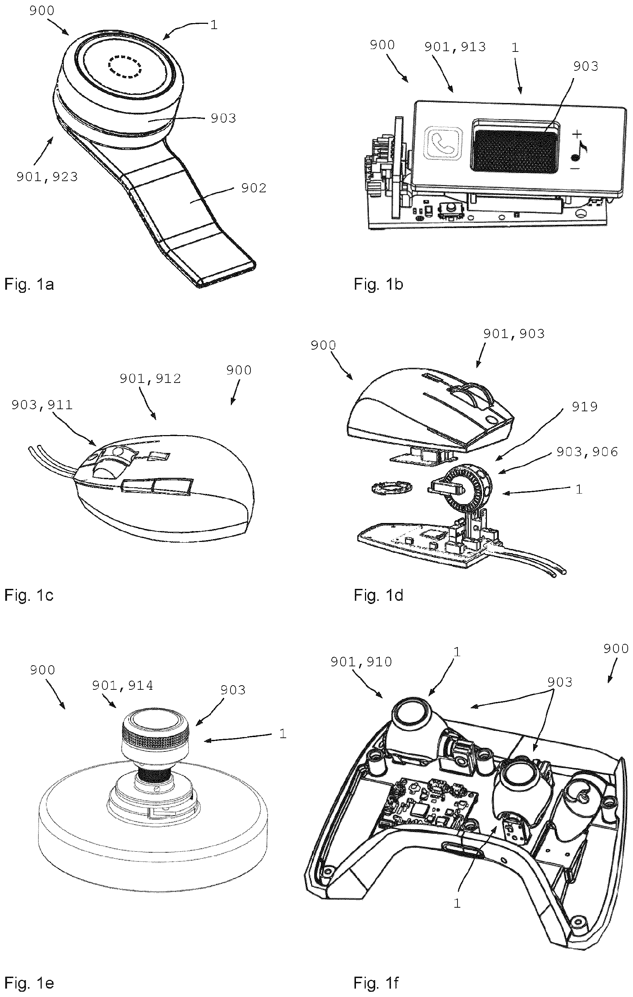

Figuren 1a bis 1f zeigen mehrere Bedieneinrichtungen 901 Bediensysteme 900, in denen die magnetorheologische Bremseinrichtung 1 eingesetzt werden kann.

Figur 1a zeigt einen haptischen Bedienknopf 923 bzw. Drehknopf 923. Der Bedienknopf weist ein Aufnahmeteil 902 auf. Der Bedienknopf 923 wird über das Bedienelement 903 bedient. Eine Benutzerschnittstelle kann genutzt werden, um Informationen einer Schnittstelleneinrichtung 800 zu übermitteln und eine Zuordnung 804 bzw. eine Zuordnungsfunktion 804b für einen gewünschten Bewegungswiderstandsverlauf 804b zu übermitteln.

In Figur 1b ist die Bedieneinrichtung 901 des Bediensystems 900 als Fingerwalze 913 mit magnetorheologischer Bremseinrichtung 1 dargestellt. Die Fingerwalze 913 ist bevorzugt beispielsweise in Lenkrädern einsetzbar. Die Fingerwalze 913 ist jedoch nicht auf diesen Anwendungsfall beschränkt. Die Fingerwalze 713 kann allgemein je nach Einbausituation auch mit jedem anderen Finger nutzbar sein.

In Figur 1c und Figur 1d ist das Bediensystem 900 als Computermaus 912 ausgeführt. Die Bedieneinrichtung 901 ist in dem Mausrad 911 untergebracht. Die magnetorheologische Bremseinrichtung 1 kann genutzt werden, um ein haptisches Feedback zu steuern. Eine Getriebeeinheit 919 dient zur Übersetzung der Bewegung des Mausrads 911.

Figur 1e zeigt einen Joystick 914 als haptische Bedieneinrichtung 901, in welchem eine magnetorheologische Bremseinrichtung 1 untergebracht ist. Außerdem ist die magnetorheologische Bremseinrichtung 1 auch in einem Gamepad 910 bevorzugt nutzbar, um dem Spieler in Abhängigkeit der Spielsituation ein haptisches Feedback zu geben, siehe Figur 1f.

In diesen Ausführungsbeispielen weist die magnetorheologische Bremseinrichtung 1 ein Aufnahmeteil 903 als erste Bremskomponente 2 und ein Bedienelement 903 als zweite Bremskomponente 3 ausgeführt, welche relativ zueinander bewegbar sind. Ein Bewegungswiderstand 802 zwischen den beiden Bremskomponenten 2,3 ist veränderbar, sodass ein Benutzer ein haptisches Feedback erhält.

Ein Bediensystem 900 mit einer haptischen Bedieneinrichtung 901 kann beispielsweise zur Bedienung von Maschinen, Medizingeräten oder zur Verwendung im und für das Kraftfahrzeug eingesetzt werden. Möglich ist auch der Einsatz an sonstigen Geräten oder anderen Vorrichtungen.

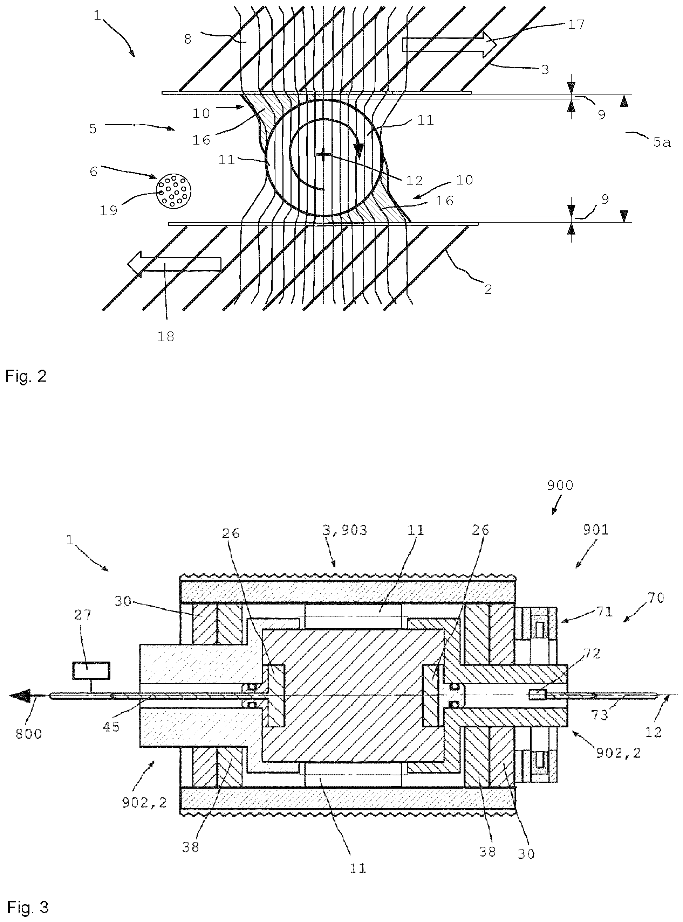

Figur 2 zeigt eine stark schematische Querschnittsansicht einer magnetorheologischen Bremseinrichtung 1 zur Beeinflussung der Kraftübertragung zwischen zwei Bremskomponenten 2 und 3.

Zwischen den Bremskomponenten 2 und 3 ist ein Spalt 5 mit einer Spaltbreite 5a vorgesehen, der hier mit einem Medium 6 gefüllt ist. Das Medium 6 umfasst ferromagnetische Partikel 19, wie Carbonyleisenpulver, welches in einem Fluid, wie Wasser oder Öl oder Luft aufgenommen sein kann.

Zwischen den zwei Bremskomponenten 2 und 3 in Fig. 2 eine Übertragungskomponente 11, z. B. ein Wälzkörper 11 bzw. Drehkörper 11 vorgesehen. Der Wälzkörper 11 hat hier keinen direkten Kontakt zur Oberfläche der Bremskomponenten 2 und/oder 3 und wälzt sich deshalb nicht direkt darauf ab. Ein freier Abstand 9 kann ein Mehrfaches des Durchmessers eines typischen mittleren Partikeldurchmessers betragen.

Trotz Abstand zwischen der Übertragungskomponente 11 und Bremskomponenten 2, 3 kann durch Reibung in Folge der Relativgeschwindigkeit die Übertragungskomponente 11 in eine Drehbewegung versetzt werden. Die Drehbewegung ist ohne und auch mit einem wirkenden Magnetfeld 8 möglich.

Wird die magnetorheologische Bremseinrichtung 1 mit einem Magnetfeld 8 beaufschlagt, bilden sich die (hier rein schematisch dargestellten) Feldlinien 8 abhängig vom Abstand zwischen den Wälzkörpern 11 und den Bremskomponenten 2, 3 aus. Vorzugsweise bestehen Übertragungskomponente 11 und Bremskomponenten 2, 3 zumindest teilweise aus ferromagnetischem Material, weshalb die magnetische Flussdichte umso höher wird, je kleiner der Abstand zwischen Drehkörper 11 und Bremskomponenten 2, 3 ist. Die Feldlinien 8 (Magnetkreis) treten konzentriert durch die Übertragungskomponente 11 hindurch. Das dort inhomogene und starke Feld führt zu einer lokalen und starken Vernetzung der magnetisch polarisierbaren Partikel 19 (magnetische Verkettung).

Durch die Drehbewegung der Übertragungskomponente 11 in Richtung des spitzwinkligen Bereichs 10 wird die Wirkung des auf den sich bildenden Keil 16 in dem Medium 6 stark erhöht und das mögliche Brems- oder Kupplungsmoment wird extrem vergrößert, weit über den Betrag hinaus, der normalerweise in einer Scherströmung zwischen parallel Flächen dem Medium 6 erzeugbar ist. Eine mechanische Verstärkung des magnetorheologischen Effekts kann so weit gehen, dass eine Kraftübertragung auch nach Abschalten eines angelegten Magnetfeldes möglich ist, wenn die Partikel verkeilt wurden.

Figur 3 zeigt einen schematischen Querschnitt durch eine Bedieneinrichtung 901 eines Bediensystems 900 mit einer magnetorheologischen Bremseinrichtung 1, die über zwei Bremskomponenten 2 und 3 verfügt. Die erste Bremskomponente 2 bildet hier das aus mehreren Elementen bestehende Aufnahmeteil 902 und die zweite Bremskomponente 3 bildet das drehbare Bedienelement 903. Die zweite Bremskomponente 3 ist relativ zu der ersten Bremskomponente 2 kontinuierlich drehbar und axial verschiebbar durch die Lager 30 daran aufgenommen.

Zwischen den Bremskomponenten 2 und 3 ist eine geschlossene Kammer ausgebildet, die mit dem Medium 6 gefüllt ist. Dichtungen 38 dichten das Innere zuverlässig ab. In dem Spalt 5 zwischen den Bremskomponenten 2, 3 sind hier mehrere Übertragungskomponenten 11 angeordnet. Die mehrteilige erste Bremskomponente 2 umfasst eine elektrische Spule 26 zur Erzeugung des Magnetfelds 8 und des Bewegungswiderstands 802.

Über ein Kabel 45 ist die elektrische Spule 26 mit der Steuereinrichtung 27 zur Steuerung verbunden, welches auch zum Anschluss an eine Schnittstelleneinrichtung 800 dienen kann. Es ist außerdem hier eine Sensoreinrichtung 70 mit einem Magnetfeldsensor 72 mit einer Sensorleitung 73 und einer Magnetringeinrichtung 71 vorhanden um eine Winkelstellung 803 bzw. eine Relativposition 803 der beiden Bremskomponenten 2, 3 zueinander zu erfassen und zur Steuereinrichtung zu übermitteln.

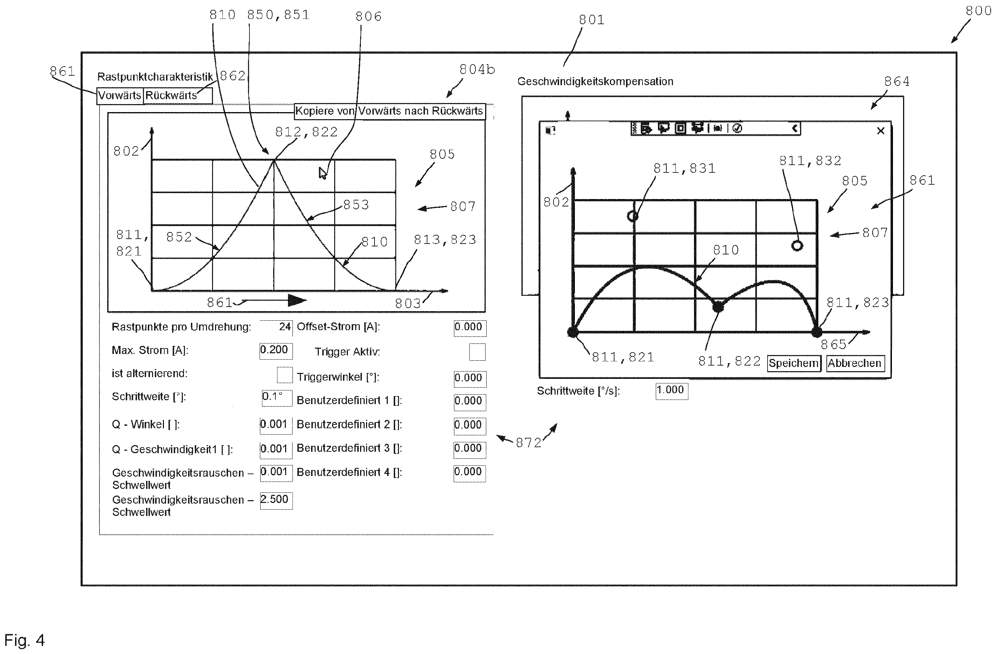

Figur 4 zeigt ein Ausführungsbeispiel einer Benutzeroberfläche 801 einer Schnittstelleneinrichtung 800. Links ist ein Bewegungswiderstandsverlauf 804b dargestellt. Rechts ist der Geschwindigkeitskorrekturparameter 864 dargestellt.

Der Bewegungswiderstandsverlauf 804b umfasst ein Koordinatensystem 805 in dem der Bewegungswiderstand 802 gegen die Relativposition 803 von dem Aufnahmeteil 902 und Bedienelement 903 aufgetragen ist. In dem Koordinatensystem 805 sind drei Vorgabepunkte 811, 812, 813 vorhanden, welche eine Kurve 810 definieren. Die Vorgabepunkte 811, 812, 813 sind hier als Stützstellen 821, 822, 823 ausgeführt, d. h., die Kurve verläuft durch die Vorgabepunkte 811, 812, 813.

Die Vorgabepunkte 811, 812, 813 können durch hier als Mauszeiger ausgebildete Eingabemittel 806 einem durch das Koordinatensystem 805 definierten Einstellungsbereich 807 durch einen Benutzer verschoben und angepasst werden. Außerdem kann ein Benutzer weitere Vorgabepunkte hinzufügen oder auch (wieder) entfernen, um die Kurve 810 und damit den Bewegungswiderstandsverlauf 804b an seine persönlichen Erfordernisse anzupassen.

Neben der visuellen Manipulation sind weitere Einstellparameter 872 vorhanden, durch welche die Kurve 810 anpassbar ist. Insbesondere kann durch die weiteren Einstellparameter 807 eine gewünschte Kurve 810 erzeugt und/oder eine bestehende Kurve 810 verändert werden.

Der Bewegungswiderstandsverlauf 804b kann in Abhängigkeit der Bewegungsrichtung, d. h. vorwärts 861 oder rückwärts 862 eingestellt werden. In der Figur ist der Bewegungswiderstandsverlauf 804b für die Bewegungsrichtung vorwärts 861 dargestellt. Ein für eine Bewegungsrichtung 861, 862 eingestellter Bewegungswiderstandsverlauf 804b kann auch für die andere Bewegungsrichtung 861, 862 übertragen werden, sodass ein Bewegungswiderstandsverlauf 804b unabhängig von der Bewegungsrichtung 861, 862 vorliegt.

Hier ist der Bewegungswiderstandsverlauf 804b als Rastpunkt 851 ausgebildet, welcher einen Höhenpunkt 850 aufweist, welcher als gipfelartiges Maximum 850 ausgebildet ist. Mit zunehmender Relativposition 803, d. h. zum Beispiel einer Winkelstellung 803, spürt der Benutzer zunächst eine Anstiegsphase 852, in welcher der Bewegungswiderstand 802 für den Benutzer spürbar bis zum Höhenpunkt 850 ansteigt. Überwindet der Benutzer den Bewegungswiderstand am Höhenpunkt 850, nimmt der Bewegungswiderstand 802 in der Abstiegsphase 853 wieder spürbar ab. Die Kurve 810 gibt den Bewegungswiderstandsverlauf 804b wieder. Der Benutzer der haptischen Bedieneinrichtung nimmt diesen Bewegungswiderstandsverlauf 804b hier als Rastpunkt 851 wahr.

Dieser Bewegungswiderstandsverlauf 804b kann zum Beispiel ein Anschlag beim Scrollen durch eine lange Liste mit einem Mausrad 911 einer Computermaus 912 genutzt werden. Der Benutzer kann hier die Kurve 810 durch Verschiebung der Vorgabepunkte 811, 812, 813 anpassen. So kann er beispielsweise den maximalen Bewegungswiderstand 802 durch Hoch- oder die Runterschieben des Vorgabepunkts 812 im Koordinatensystem805 an seine eigenen Bedürfnisse, wie als angenehm empfundene Fingerkraft, anpassen. Außerdem ist es beispielsweise möglich, den durch horizontale Verschiebung des Vorgabepunkts 812 im Koordinatensystem 805 die Steigung der Anstiegsphase 852 und der Abstiegsphase 853 zu verändern. Bei einer Verschiebung des Vorgabepunkts 812 nach weiter links, würde die Anstiegsphase 852 auf einen kleineren Bereich der Relativposition projiziert, sodass der Benutzer den Höhenpunkt 850 als "plötzlich" auftretenden Anschlag wahrnimmt, während die Abstiegsphase 853 als großer Bereich empfunden wird.

Rechts in der Benutzeroberfläche 801 der Schnittstelleneinrichtung 800 ist der Geschwindigkeitskorrekturparameter 864 dargestellt. Durch den Geschwindigkeitskorrekturparameter 864 ist der Bewegungswiderstand 802 in Abhängigkeit der Geschwindigkeit verändert, mit der das Bedienelement 903 vom Benutzer bewegt wird. Hier ist der Geschwindigkeitskorrekturparameter 864 für die Bewegungsrichtung vorwärts 861 im Koordinatensystem 805. Die Kurve 810 wird hier durch insgesamt fünf Vorgabepunkte 811 beschrieben, welche in dem Einstellungsbereich 807 durch den Benutzer durch ein Eingabemittel 806 visuell verschiebbar sind. Die Kurve 810 umfasst drei Stützstellen 821, 822, 831 und zwei Hebelpunkte 831, 832. Durch die Hebelpunkte 831, 832 kann ein Verlauf der Kurve 810 unabhängig von den Stützstellen 821, 822, 823 angepasst werden. Auch für den Geschwindigkeitskorrekturparameter sind weitere Einstellparameter 872 vorhanden.

Bei der dargestellten Kurve 810 steigt der Bewegungswiderstand 802 zunächst mit steigender Bewegungsgeschwindigkeit 865 und nimmt dann wellenförmig mit weiter steigender Bewegungsgeschwindigkeit 865 ab. Beispielsweise kann der Benutzer den Bewegungswiderstand 802 so einstellen, dass er eine zum Lesen optimale Geschwindigkeit zum Scrollen schnell einstellen kann, ohne diese jedoch für andere Operationen zu limitieren.

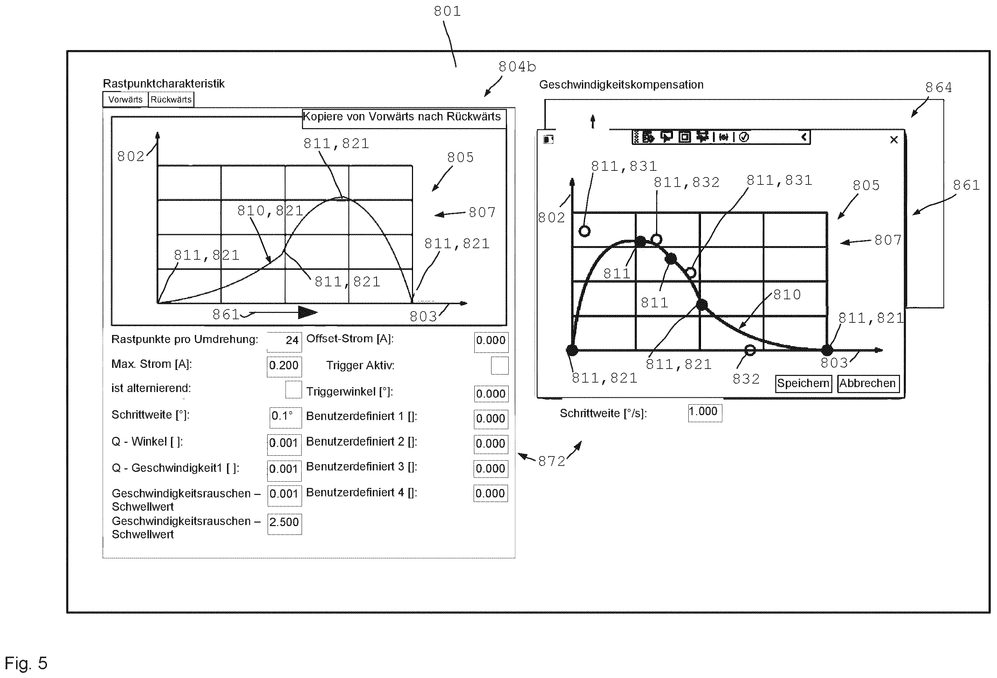

Figur 5 zeigt ein weiteres Ausführungsbeispiel einer Benutzeroberfläche 801 einer Schnittstelleneinrichtung 800. Links ist ein Bewegungswiderstandsverlauf 804b dargestellt. Rechts ist der Geschwindigkeitskorrekturparameter 864 dargestellt. Hier umfasst der Bewegungswiderstandsverlauf 804b und der vier Vorgabepunkte 811, welche alle als Stützstellen 821 ausgebildet sind. Der Geschwindigkeitskorrekturparameter 864 umfasst acht Vorgabepunkte 811, welche als Stützstellen 821 und Hebelpunkte 831,832 ausgebildet sind.

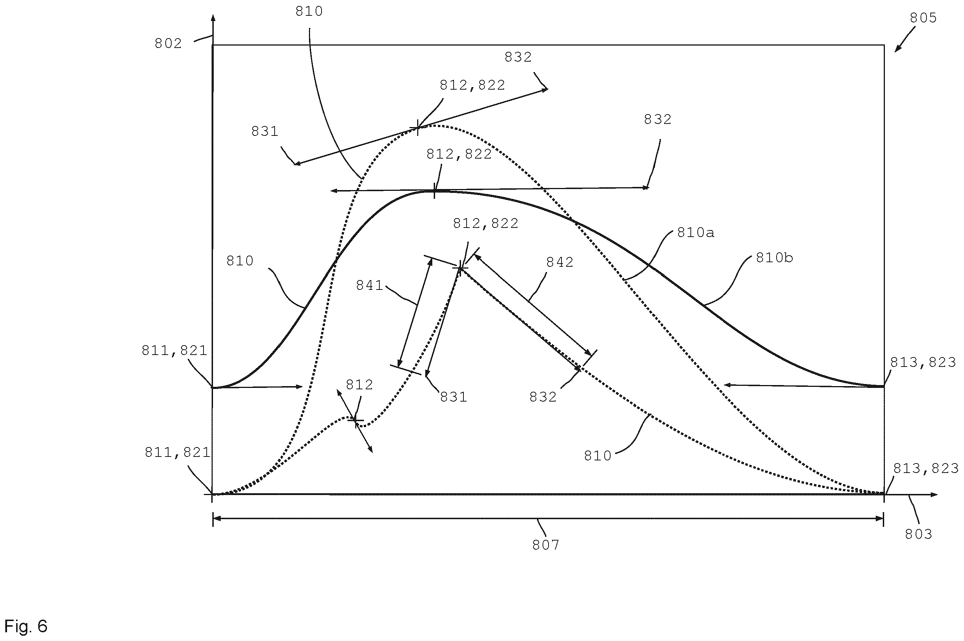

Figur 6 zeigt verschiedene Kurven 810, 810a, 810b des Bewegungswiderstandsverlaufs 804b in einem Koordinatensystem 805 einer Benutzeroberfläche 801 einer Schnittstelleneinrichtung 800 eines Bediensystems 900. Jede der Kurven 810, 810a, 810b umfasst mehrere Vorgabepunkte 811, 812, 813, welche hier durch Stützstellen 821, 822, 823 und Hebelpunkte 831, 832 bereitgestellt werden.

Die Hebelpunkte 831, 832 liegen auf der Tangenten der Kurve 810, 810a, 810b. Durch eine Verschiebung eines Hebelpunkts 831, 832 im Einstellbereich kann die Steigung der Kurve 810 an einem Stützstelle 821, 822, 823 verändert werden. Die Gewichtung der Steigung wird dabei durch die jeweilige Hebellänge 841, 842 reguliert. Ein langer Hebelarm 841, 842 führt somit auch zu einem hohen Einfluss der Position des Hebelpunkts 831, 832 auf den Verlauf der Kurve 810. So ist der Verlauf der Kurven 810, 810a, 810b sehr flexibel an die Bedürfnisse und/oder Vorgaben des Benutzers anpassbar.

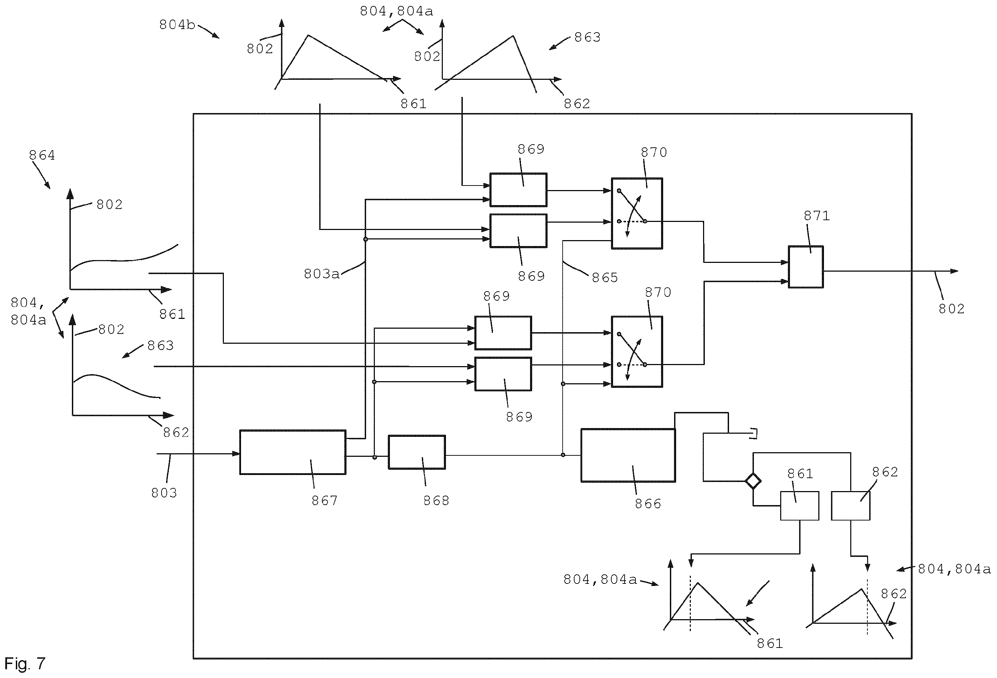

Figur 7 zeigt ein Übersichtsschaubild über die Funktionsweise des Bediensystems 900 und des erfindungsgemäßen Verfahrens. Die mit der Benutzeroberfläche 801 der Schnittstelleneinrichtung 800 erzeugten Kurven 810 der Bewegungswiderstandsverläufe 804b und des Geschwindigkeitskorrekturparameters 864 können als Zuordnungen 804 oder auch Zuordnungsfunktionen 804b in der Bedieneinrichtung 901 hinterlegt werden. Hierzu kann die Bedieneinrichtung beispielsweise eine entsprechende Steuereinrichtung 27 mit einer Speichereinheit umfassen, auf welcher die Zuordnungen 804 und/oder Zuordnungsfunktionen 804a speicherbar sind. Die Zuordnungen 804 bzw. Zuordnungsfunktionen 804a können für die Bewegungsrichtungen vorwärts 861 bzw. rückwärts 862 verschieden sein.

Ändert ein Benutzer die Relativposition 803 des Bedienelements 903 zum Aufnahmeteil 902, wird dies durch eine Sensoreinrichtung 73 erfasst. Die erfassten Sensordaten werden durch einen Filter 867 gefiltert. Zur genauen Erfassung der Bewegungsrichtung wird diese verzögert mittels einer Hysterese 868 ermittelt, d. h. kleine oder kurze Änderungen der Bewegungsrichtung 861, 862 bleiben unberücksichtigt.

Anhand der gefilterten Relativposition 803a und der Bewegungsgeschwindigkeit 865 werden aus den hinterlegten Zuordnungen 804 bzw. Zuordnungsfunktionen 804a Bewegungswiderstände 802 in Abhängigkeit der hier richtungsabhängigen Bewegungswiderstandsverläufe 804b und der richtungsabhängigen Geschwindigkeitskorrekturparameter 864 interpoliert 869. In Abhängigkeit der Bewegungsrichtung 862, 863 werden die Bewegungswiderstandsverlauf 802 und der Geschwindigkeitskorrekturparameter 864 durch Auswahlschalter 870 zu einem Bewegungswiderstand 802 zusammengefasst 871.

Außerdem ist es möglich einen Bewegungswiderstand 802 zwischen zwei Bewegungsrichtungen 861, 862 durch einen Korrekturparameter 863 zu koppeln. Dadurch ist es besonders einfach möglich, den Bewegungswiderstand in die Bewegungsrichtung rückwärts insbesondere geringer in Abhängigkeit der Bewegungswiderstandsverlaufs 804b in der Bewegungsrichtung vorwärts 861 zu wählen. Durch den Korrekturfaktor 863 ist es möglich, dass ein Benutzer beispielsweise beim Einziehen oder Ausstrecken eines Fingers den Bewegungswiderstand 802 als gleich schwer empfindet. Dies ist analog auch für den Geschwindigkeitskorrekturparameter 863 möglich.

So kann vorteilhaft die Anatomie beispielsweise der Hand oder der Finger des Benutzers mit berücksichtigt werden.

Weiter wird hier eine Änderung der Bewegungsrichtung 866 erfasst. Hierdurch kann die Anfangsposition auf dem Bewegungswiderstandsverlauf 804b in Abhängigkeit der Änderung der Bewegungsrichtung 866 eingestellt werden. Zum Beispiel kann die Anfangsposition auf dem Bewegungswiderstandsverlauf 804b so angepasst werden, dass der Benutzer immer einen zunächst steigenden oder auch fallenden Bewegungswiderstand 802 als haptisches Feedback erfährt, wenn die Bewegungsrichtung von vorwärts 861 auf rückwärts 862 oder andersherum geändert wird.

Der Bewegungswiderstand 802 dient dann als Steuergröße für die Ansteuerung der elektrischen Spule und die Erzeugung des Magnetfelds 8, durch welches der Bewegungswiderstand 802 ab den Benutzer weitergeleitet wird.

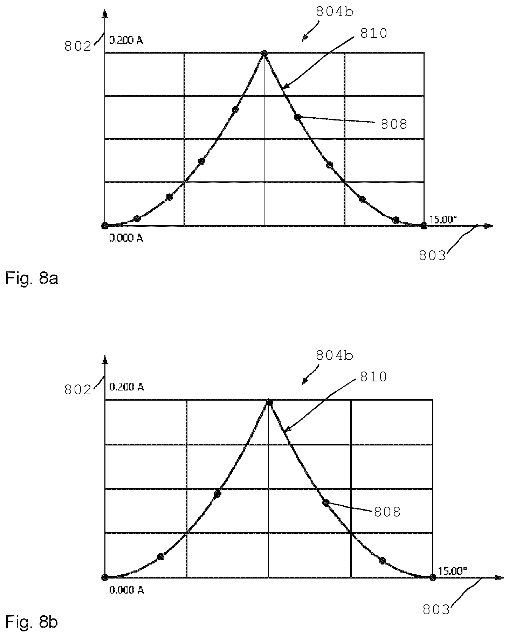

Die Figuren 8a und 8b zeigen mathematisch optimierte (vereinfachte) Kurven 810, welche auf der mit Bezug zur Figur 4 beschriebenen Kurve 810 beruhen. Aus den optimierten Kurven 810 wird dann, wie zuvor beschrieben, die Zuordnungstabelle bzw. die Zuordnungsfunktion 804a bestimmt. Dadurch kann Speicherbedarf eingespart werden.

Es hat sich gezeigt, dass je nach Auflösung der Zuordnungen 804 (sog. Step Width, z. B. 0,1° Relativposition bzw. Drehwinkel mit dem jeweils zugeordneten Bewegungswiderstandswert) mitunter sehr viele Werte im Speicher der Bedieneinrichtung 901 abgespeichert werden müssen. Beispielsweise werden bei 24 Ticks pro Umdrehung (=> 15° pro Tick) und bei einer Step Width von 0,1° insgesamt 150 Werte für die Zuordnung 804 abgespeichert. Dieser Speicheraufwand kann einerseits durch die Vorgabe einer Zuordnungsfunktion vermindert oder durch eine mathematische Optimierung der gewünschten Kurve 810 massiv gesenkt werden.

Für die Optimierung wurde die Kurve 810 der Figur 4 einer Linearisierung unterzogen. Die Figuren 8a und 8b zeigen jeweils unterschiedliche stark linearisierte Verläufe der Kurve 810 der Figur 4. Praktisch kann der maximal zulässige Fehler bei der Linearisierung (z. B. 1%) der Kurve 810 vorgegeben werden und danach ermittelt die Software die Anzahl der (z. B. zwischen den Anfangs- und Endpunkten und dem Scheitelpunkt liegenden) Stützstellen 808. Diese Stützstellen 808 und die manuell vorgegebenen Anfangs-, End- und Scheitelpunkte werden z. B. in der Zuordnungstabelle abgespeichert. Je höher der zulässige Fehler, desto weniger Stützstellen 808 werden benötigt. Bewegungswiderstandswerte von Drehwinkelpositionen, die zwischen zwei Stützstellen 808 liegen, können von der Schnittstelleneinrichtung 800 z. B. auch durch eine lineare Interpolation ermittelt werden.

Die Optimierung der Figur 8a sieht hier einen maximalen Fehler von 1,1 % vor und erreicht damit eine Linearisierung mit insgesamt 11 Stützstellen 808. Die Optimierung der Figur 8b sieht einen maximalen Fehler von 3 % vor und erreicht damit eine noch stärkere Vereinfachung der Kurve 810, sodass hier nur 7 Stützstellen 808 nötig sind.

**Bezugszeichenliste:**

| | | | |
|---|---|---|---|
| 1 | Bremseinrichtung | 810a | Kurve |
| 2, 3 | Bremskomponente | 810b | Kurve |
| 5 | Spalt, Kanal | 811-813 | Vorgabepunkt |
| 5a | Spaltbreite | 821-823 | Stützstelle |
| 6 | Medium | 831-832 | Hebelpunkt |
| 8 | Feld | 841-842 | Hebellänge |
| 9 | freier Abstand | 850 | gipfelartiges Maximum, Höhenpunkt |
| 10 | spitzwinkliger Bereich | | |
| 11 | Übertragungskomponente, Wälzkörper, Drehkörper | 851 | Rastpunkt |
| | | 852 | Anstiegsphase |
| 12 | Drehachse | 853 | Abstiegsphase |
| 16 | Keilform | 861 | Bewegungsrichtung, vorwärts |
| 17 | Richtung der Relativbewegung | | |
| | | 862 | Bewegungsrichtung, rückwärts |
| 18 | Richtung der Relativbewegung | | |
| | | 863 | Korrekturparameter |
| 19 | magnetische Partikel | 864 | Geschwindigkeitskorrekturparameter |
| 26 | Spule | | |
| 27 | Steuereinrichtung | 865 | Bewegungsgeschwindigkeit |
| 30 | Lager | 866 | Änderung der Bewegungsrichtung |
| 38 | Dichtung | | |
| 45 | Kabel | 867 | Filtern |
| 70 | Sensoreinrichtung | 868 | Hysteresefunktion |
| 71 | Magnetringeinheit | 869 | Interpolieren |
| 72 | Magnetfeldsensor | 870 | Auswahlschalter |
| 73 | Sensorleitung | 871 | Zusammenfassung zu einem Bewegungswiderstand |
| 800 | Schnittstelleneinrichtung | | |
| | | 872 | weitere Einstellparameter |
| 801 | Benutzeroberfläche | | |
| 802 | Bewegungswiderstand | 900 | Bediensystem |
| 803 | Relativposition, Winkelposition | 901 | Bedieneinrichtung |
| | | 902 | Aufnahmeteil |
| 804 | Zuordnung | 903 | Bedienelement |
| 804a | Zuordnungsfunktion | 910 | Gamepad |
| 804b | Bewegungswiderstandsverlauf | 911 | Mausrad |
| | | 912 | Computermaus |
| 805 | Koordinatensystem | 913 | Fingerwalze |
| 806 | Eingabemittel | 914 | Joystick |
| 807 | Einstellungsbereich | 919 | Getriebeeinheit |
| 808 | Stützstelle | 923 | Bedienknopf, Drehknopf |
| 810 | Kurve | | |

## Patentansprüche

1. Bediensystem (900) mit wenigstens einer Bedieneinrichtung (901) und mit wenigstens einer Schnittstelleneinrichtung (800), wobei die Bedieneinrichtung (901) wenigstens ein Aufnahmeteil (902) und wenigstens ein beweglich an dem Aufnahmeteil (902) gelagertes Bedienelement (903) umfasst, wobei das Bedienelement (903) zur Durchführung einer Eingabe mittels wenigstens eines Fingers relativ zu dem Aufnahmeteil (902) innerhalb eines Bewegungsbereichs bewegt werden kann und wobei ein Bewegungswiderstand (802) für die Bewegbarkeit des Bedienelements (903) mittels wenigstens einer steuerbaren Bremseinrichtung (1) in Abhängigkeit einer Relativposition (803) des Bedienelements (903) einstellbar ist und wobei die Bremseinrichtung (1) dabei wenigstens eine hinterlegte Zuordnung (804) von Relativpositionen (803) und Bewegungswiderständen (802) berücksichtigt und wobei die Zuordnung (804) mittels der Schnittstelleneinrichtung (800) anpassbar ist, und wobei
die Schnittstelleneinrichtung (800) mittels wenigstens einer grafischen Benutzeroberfläche (801) ein Koordinatensystem (805) anzeigt, in welchem mittels eines Eingabemittels (806) Vorgabepunkte (811,812,813) für wenigstens einen Einstellungsbereich (807), welcher wenigstens einen Teil des Bewegungsbereichs präsentiert, positioniert werden können,
**dadurch gekennzeichnet, dass**
für den Bewegungsbereich eine Vielzahl von Einstellungsbereichen vorgesehen sind und dass die Schnittstelleneinrichtung (800) dazu geeignet und ausgebildet ist, eine in Abhängigkeit der Vorgabepunkte (811,812,813) verlaufende Kurve (810) zu erstellen und auf der Benutzeroberfläche (801) anzuzeigen und die Zuordnung (804) in Abhängigkeit eines Verlaufs der Kurve (810) zu bestimmen, sodass eine Anpassung der Zuordnung (804) durch visuell modulierbare Kurven (810) ermöglicht wird und dass die Schnittstelleneinrichtung (800) dazu geeignet und ausgebildet ist, eine für einen Einstellungsbereich (807) angepasste Zuordnung automatisch und/oder auf Wunsch für die übrigen vorgesehenen Einstellungsbereiche (807) zu übernehmen.

2. Bediensystem (900) nach dem vorhergehenden Anspruch, wobei die Vorgabepunkte (811,812,813) Stützstellen (821,822,823) umfassen und wobei die Schnittstelleneinrichtung (800) dazu geeignet und ausgebildet ist, eine durch die Stützstellen (821, 822, 823) verlaufende Kurve (810) zu erstellen.

3. Bediensystem (900) nach einem der vorhergehenden Ansprüche, wobei die Vorgabepunkte (811,812,813) Hebelpunkte (831,832,833) umfassen und wobei die Schnittstelleneinrichtung (800) dazu geeignet und ausgebildet ist, die Kurve (810) in Abhängigkeit der Position der Hebelpunkte (831,832) zu krümmen und wobei der Hebelpunkt (831,832) auf einer Tangente der Kurve (810) liegt und/oder wobei die Kurve (810) in Abhängigkeit einer Hebellänge (841,842) gekrümmt wird.

4. Bediensystem (900) nach den beiden vorhergehenden Ansprüchen, wobei die Stützstellen (821,822,823) grafisch unterscheidbar von den Hebelpunkten (831,832) dargestellt werden.

5. Bediensystem (900) nach einem der vorhergehenden Ansprüche, wobei in der Schnittstelleneinrichtung (800) wenigstens eine Kurve (810) für bereits eine vordefinierte Zuordnung (804) hinterlegt ist und wobei diese Kurve (810) angezeigt wird und durch Positionieren von Vorgabepunkten (811,812,813) anpassbar ist.

6. Bediensystem (900) nach einem der vorhergehenden Ansprüche, wobei in der Schnittstelleneinrichtung (800) mehrere Kurven (810) für vordefinierte Zuordnungen (804) hinterlegt sind und wobei aus diesen Kurven (810, 810a, 810b) eine Kurve (810) auswählbar und anpassbar ist.

7. Bediensystem (900) nach einem der vorhergehenden Ansprüche, wobei im Einstellungsbereich (807) wenigstens eine Kurve (810) mit wenigstens einem gipfelartigen Maximum (850) erzeugbar ist und wobei das gipfelartige Maximum (850) bei einer Bedienung des Bedienelements als ein Rastpunkt haptisch wahrnehmbar ist.

8. Bediensystem (900) nach dem vorhergehenden Anspruch, wobei die Schnittstelleneinrichtung (800) dazu geeignet und ausgebildet ist, mittels einer Benutzereingabe abzufragen, wie viele Einstellungsbereiche (807) gewünscht sind und eine Größe des Einstellungsbereichs (807) aufgrund der Benutzervorgabe automatisch zu bestimmen und dazu einen für die Bewegbarkeit des Bedienelements (903) vorgesehenen Bewegungsbereich durch die Anzahl der Rastpunkte zu teilen.

9. Bediensystem (900) nach einem der vorhergehenden Ansprüche, wobei eine Größe des Einstellungsbereichs (807) benutzerdefiniert anpassbar ist und wobei die Größe des Einstellungsbereichs (807) beispielsweise eine Teilumdrehung oder eine ganze Umdrehung oder auch mehr als eine Umdrehung beträgt.

10. Bediensystem (900) nach einem der vorhergehenden Ansprüche, wobei die Zuordnung (804) unter Berücksichtigung einer Bewegungsrichtung (861,862) des Bedienelements (903) anpassbar ist und wobei die Schnittstelleneinrichtung (800) dazu geeignet und ausgebildet ist, für einen Einstellungsbereich (807) jeweils eine visuell modulierbare Kurve (810) für jede Bewegungsrichtung (861,861) bereitzustellen.

11. Bediensystem (900) nach einem der vorhergehenden Ansprüche, wobei die Schnittstelleneinrichtung (800) dazu geeignet und ausgebildet ist, aus einer angepassten Kurve (810) für eine Bewegungsrichtung (861,862) automatisch oder auf Wunsch eine Kurve (810b) für die andere Bewegungsrichtung (861,862) zu erzeugen und dazu die Kurve (810b) wenigstens teilweise zu spiegeln und mit wenigstens einem Korrekturparameter (863) zur Berücksichtigung einer Fingerkinematik der menschlichen Hand anzupassen.

12. Bediensystem (900) nach dem vorhergehenden Anspruch, wobei der Korrekturparameter (863) für eine Rückwärtsbewegung (862), welche durch Ausstrecken des Fingers erfolgt, eine wenigstens abschnittsweise Absenkung des Bewegungswiderstands (802) und/oder für eine Vorwärtsbewegung (862), welche durch Einziehen des Fingers erfolgt, eine Erhöhung des Bewegungswiderstands (802) vorsieht.

13. Bediensystem (900) nach einem der vorhergehenden Ansprüche, wobei die Schnittstelleneinrichtung (800) dazu geeignet und ausgebildet ist, eine Kurve (810) wenigstens teilweise mit wenigstens einem Geschwindigkeitskorrekturparameter (864) zur Berücksichtigung einer Bewegungsgeschwindigkeit (865) des Bedienelements (903) anzupassen.

14. Bediensystem (900) nach einem der vorhergehenden Ansprüche, wobei die Schnittstelleneinrichtung (800) dazu geeignet und ausgebildet ist, in Abhängigkeit von Vorgabepunkten (811,812,813) erstmalig eine Zuordnung (804) zu erstellen, sodass die Zuordnung (804) im Rahmen der Herstellung und/oder einer Neukonfiguration durch visuell modulierbare Kurven (810) erzeugt werden kann.

15. Verfahren zum Betreiben eines Bediensystems (900) nach einem der vorhergehenden Ansprüche.

## Claims

1. Operating system (900) comprising at least one operating device (901) and at least one interface device (800), wherein the operating device (901) comprises at least one mounting part (902) and at least one operating element (903) movably mounted on the mounting part (902), wherein the operating element (903) can be moved relative to the mounting part (902) within a range of movement to perform an input using at least one finger, and wherein a resistance to movement (802) for the movability of the operating element (903) is adjustable by means of at least one controllable braking device (1) as a function of a relative position (803) of the operating element (903), and wherein the braking device (1) takes into account at least one stored association (804) between relative positions (803) and resistances to movement (802), and wherein the association (804) is adaptable via the interface device (800), and wherein the interface device (800) displays, by means of at least one graphical user interface (801), a coordinate system (805) in which, using an input means (806), reference points (811, 812, 813) can be positioned for at least one adjustment range (807) representing at least a portion of the range of movement,
**characterized in that**
a plurality of adjustment ranges are provided for the range of movement, and **in that** the interface device (800) is adapted and configured to generate a curve (810) that follows a path determined by the reference points (811, 812, 813) and, on the user interface, (801) and to determine the mapping (804) as a function of the course of the curve (810), such that an adjustment of the mapping (804) is enabled via visually modulatable curves (810), and wherein the interface device (800) is adapted and configured to automatically and/or upon request apply a mapping adjusted for one setting range (807) to the other intended setting ranges (807).

2. Operating system (900) according to the preceding claim, wherein the predefined points (811, 812, 813) comprise control points (821, 822, 823), and wherein the interface device (800) is adapted and configured to generate a curve (810) passing through the control points (821, 822, 823).

3. Operating system (900) according to any one of the preceding claims, wherein the predefined points (811, 812, 813) comprise leverage points (831, 832, 833), and wherein the interface device (800) is adapted and configured to curve the curve (810) as a function of the position of the leverage points (831, 832), and wherein the leverage point (831, 832) lies on a tangent to the curve (810) and/or wherein the curve (810) is curved as a function of a lever length (841, 842).

4. Operating system (900) according to the two preceding claims, wherein the support points (821, 822, 823) are represented in a manner graphically distinguishable from the leverage points (831, 832).

5. Operating system (900) according to any of the preceding claims, wherein at least one curve (810) for a predefined assignment (804) is stored in the interface device (800), and wherein said curve (810) is displayed and is adjustable by positioning set points (811, 812, 813).

6. Operating system (900) according to any of the preceding claims, wherein a plurality of curves (810) for predefined assignments (804) are stored in the interface device (800), and wherein a curve (810) is selectable and adjustable from among said curves (810, 810a, 810b).

7. Operating system (900) according to any of the preceding claims, wherein at least one curve (810) having at least one peak-like maximum (850) is generatable in the setting area (807), and wherein said peak-like maximum (850) is haptically perceptible as a detent point upon operation of the control element.

8. Operating system (900) according to the preceding claim, wherein the interface device (800) is adapted and configured to query, via user input, how many adjustment ranges (807) are desired and to automatically determine a size of the adjustment range (807) based on the user specification, and to this end to divide a movement range provided for the mobility of the control element (903) by the number of detent points.

9. Operating system (900) according to any one of the preceding claims, wherein a size of the adjustment range (807) is adjustable by the user, and wherein the size of the adjustment range (807) amounts to, for example, a partial rotation, a full rotation, or even more than one rotation.

10. Operating system (900) according to any one of the preceding claims, wherein the assignment (804) is adjustable taking into account a direction of movement (861, 862) of the control element (903), and wherein the interface device (800) is adapted and configured to provide, for an adjustment range (807), a respective visually modulatable curve (810) for each direction of movement (861, 862).

11. Operating system (900) according to any of the preceding claims, wherein the interface device (800) is adapted and configured to generate, automatically or upon request, a curve (810b) for the other direction of movement (861, 862) based on an adapted curve (810) for one direction of movement (861, 862), and to do so by at least partially mirroring the curve (810b) and adjusting it using at least one correction parameter (863) to account for the finger kinematics of the human hand.

12. Operating system (900) according to the preceding claim, wherein the correction parameter (863) provides for a reduction of the movement resistance (802)-at least in certain sections-for a backward movement (862) effected by extending the finger, and/or for an increase in the movement resistance (802) for a forward movement (862) effected by retracting the finger.

13. Operating system (900) according to any of the preceding claims, wherein the interface device (800) is adapted and configured to adjust a curve (810), at least in part, using at least one speed correction parameter (864) to account for a movement speed (865) of the operating element (903).

14. Operating system (900) according to any of the preceding claims, wherein the interface device (800) is adapted and configured to create an association (804) for the first time based on predefined points (811, 812, 813), such that the association (804) can be generated by means of visually modifiable curves (810) during manufacture and/or reconfiguration.

15. Method for operating an operating system (900) according to any of the preceding claims.

## Revendications

1. Système de commande (900) comprenant au moins un dispositif de commande (901) et au moins un dispositif d'interface (800), le dispositif de commande (901) comprenant au moins une partie réceptrice (902) et au moins un élément de commande (903) qui est monté de manière mobile sur la partie réceptrice (902), dans lequel ledit élément de commande (903) peut être déplacé par rapport à la partie réceptrice (902) dans une plage de mouvement afin de réaliser une saisie au moyen d'au moins un doigt, et dans lequel une résistance au mouvement (802) pour la mobilité de l'élément de commande (903) est ajustable au moyen d'au moins un dispositif de freinage commandable (1) en fonction d'une position relative (803) de l'élément de commande (903), et dans lequel, lors de cela, le dispositif de freinage (1) prend en compte au moins une association mémorisée (804) de positions relatives (803) et de résistances au mouvement (802), et dans lequel ladite association (804) est adaptable au moyen du dispositif d'interface (800),
et dans lequel le dispositif d'interface (800) affiche, au moyen d'au moins une interface utilisateur graphique (801), un système de coordonnées (805) dans lequel, grâce à un dispositif d'entrée (806), des points prédéfinis (811, 812, 813) peuvent être positionnés pour au moins une zone de réglage (807) qui présente au moins une partie de la plage de mouvement,
**caractérisé par le fait**
**qu'**une pluralité de zones de réglage est prévue pour la plage de mouvement et que le dispositif d'interface (800) est adapté et configuré pour créer une courbe (810) s'étendant en fonction des points prédéfinis (811, 812, 813) et pour afficher celle-ci sur l'interface utilisateur (801) et pour déterminer l'association (804) en fonction d'un tracé de la courbe (810) de manière à rendre possible une adaptation de l'association (804) par des courbes (810) visuellement modulables
et **que** le dispositif d'interface (800) est adapté et configuré pour adopter automatiquement et/ou sur demande une association adaptée à une zone de réglage (807) pour les zones de réglage prévues restantes (807).

2. Système de commande (900) selon la revendication précédente, dans lequel les points prédéfinis (811, 812, 81) comprennent des points d'appui (821, 822, 823) et dans lequel le dispositif d'interface (800) est adapté et configuré pour créer une courbe (810) passant par les points d'appui (821, 822, 823).

3. Système de commande (900) selon l'une quelconque des revendications précédentes, dans lequel les points prédéfinis (811, 812, 813) comprennent des points de levier (831, 832, 833), et dans lequel le dispositif d'interface (800) est adapté et configuré pour courber la courbe (810) en fonction de la position des points de levier (831, 832), et dans lequel le point de levier (831, 832) est situé sur une tangente à la courbe (810), et/ou dans lequel la courbe (810) est courbée en fonction d'une longueur de levier (841, 842).

4. Système de commande (900) selon les deux revendications précédentes, dans lequel les points d'appui (821, 822, 823) sont représentés de manière à être graphiquement distinguables des points de levier (831, 832).

5. Système de commande (900) selon l'une quelconque des revendications précédentes, dans lequel au moins une courbe (810) pour déjà une association prédéfinie (804) est mémorisée dans le dispositif d'interface (800), et dans lequel cette courbe (810) est affichée et peut être adaptée par positionnement de points prédéfinis (811, 812, 813).

6. Système de commande (900) selon l'une quelconque des revendications précédentes, dans lequel plusieurs courbes (810) pour des associations prédéfinies (804) sont mémorisées dans le dispositif d'interface (800), et dans lequel une courbe (810) peut être sélectionnée et adaptée parmi ces courbes (810, 810a, 810b).

7. Système de commande (900) selon l'une quelconque des revendications précédentes, dans lequel au moins une courbe (810) présentant au moins un maximum de type pic (850) peut être générée dans la plage de réglage (807), et dans lequel le maximum de type pic (850) est perceptible au toucher comme un point de crantage lors de l'actionnement de l'élément de commande.

8. Système de commande (900) selon la revendication précédente, dans lequel le dispositif d'interface (800) est adapté et configuré pour interroger, par le biais d'une entrée utilisateur, le nombre de plages de réglage (807) souhaitées et pour déterminer automatiquement une taille de la plage de réglage (807) en raison de ce qui est prédéfini par l'utilisateur et pour diviser une plage de mouvement prévu pour la mobilité de l'élément de commande (903) par le nombre des points de crantage.

9. Système de commande (900) selon l'une quelconque des revendications précédentes, dans lequel une taille de la plage de réglage (807) peut être adaptée de manière définie par l'utilisateur et dans lequel la taille de la plage de réglage (807) est, par exemple, une révolution partielle ou une révolution complète ou aussi plus d'une révolution.

10. Système de commande (900) selon l'une quelconque des revendications précédentes, dans lequel l'association (804) est adaptable en prenant en compte une direction de mouvement (861, 862) de l'élément de commande (903), et dans lequel le dispositif d'interface (800) est adapté et conçu pour fournir pour une plage de réglage (807) respectivement une courbe visuellement modulable (810) pour chaque direction de mouvement (861, 862).

11. Système de commande (900) selon l'une quelconque des revendications précédentes, dans lequel le dispositif d'interface (800) est adapté et conçu pour générer, à partir d'une courbe (810) adaptée pour une direction de mouvement (861, 862), automatiquement ou sur demande une courbe (810b) pour l'autre direction de mouvement (861, 862), et, à cette fin, pour symétriser au moins partiellement la courbe (810b) et l'adapter à l'aide d'au moins un paramètre de correction (863) afin de prendre en compte la cinématique des doigts de la main humaine.

12. Système de commande (900) selon la revendication précédente, dans lequel le paramètre de correction (863) prévoit, pour un mouvement de recul (862) effectué par extension du doigt, une réduction, au moins par sections, de la résistance au mouvement (802), et/ou pour un mouvement d'avancement (862) effectué par rétraction du doigt, une augmentation de la résistance au mouvement (802).

13. Système de commande (900) selon l'une quelconque des revendications précédentes, dans lequel le dispositif d'interface (800) est adapté et configuré pour adapter une courbe (810), au moins partiellement, au moyen d'au moins un paramètre de correction de vitesse (864) afin de prendre en compte une vitesse de mouvement (865) de l'élément de commande (903).

14. Système de commande (900) selon l'une quelconque des revendications précédentes, dans lequel le dispositif d'interface (800) est adapté et configuré pour créer pour la première fois une association (804) en fonction de points prédéfinis (811, 812, 813) de sorte que l'association (804) puisse être générée lors de la fabrication et/ou d'une reconfiguration au moyen de courbes visuellement modulables (810).

15. Procédé destiné à faire fonctionner un système de commande (900) selon l'une quelconque des revendications précédentes.
